(19) Europäisches Patentamt / European Patent Office / Office européen des brevets

(11) **EP 4 123 958 B1**

(12) **EUROPEAN PATENT SPECIFICATION**

(45) Date of publication and mention of the grant of the patent:
**01.11.2023 Bulletin 2023/44**

(21) Application number: **21461569.2**

(22) Date of filing: **22.07.2021**

(51) International Patent Classification (IPC):
**H04L 9/08** (2006.01)     **H04B 10/70** (2013.01)
**H04B 10/11** (2013.01)     **H04B 10/516** (2013.01)

(52) Cooperative Patent Classification (CPC):
**H04L 9/0858; H04B 10/11; H04B 10/516**

(54) **METHOD FOR COHERENT OPTICAL COMMUNICATIONS FOR THE TRANSMISSION OF INFORMATION AND FOR THE DISTRIBUTION OF A CRYPTOGRAPHIC KEY AND A SYSTEM FOR IMPLEMENTING THE METHOD**

VERFAHREN FÜR KOHÄRENTE OPTISCHE KOMMUNIKATIONEN UND ZUR ÜBERTRAGUNG VON INFORMATIONEN UND ZUR VERTEILUNG EINES KRYPTOGRAFISCHEN SCHLÜSSELS UND SYSTEM ZUR IMPLEMENTIERUNG DES VERFAHRENS

PROCÉDÉ DE COMMUNICATIONS OPTIQUES COHÉRENTES POUR LA TRANSMISSION D'INFORMATIONS ET POUR LA DISTRIBUTION D'UNE CLÉ CRYPTOGRAPHIQUE ET SYSTÈME PERMETTANT DE METTRE EN UVRE LE PROCÉDÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**25.01.2023 Bulletin 2023/04**

(73) Proprietors:
• **Uniwersytet Warszawski**
  **00-927 Warszawa (PL)**
• **Uniwersytet Mikolaja Kopernika W Toruniu**
  **87-100 Toru (PL)**

(72) Inventors:
• **Kolenderski, Piotr**
  **87-410 Borowno (PL)**
• **Lasota, Mikolaj**
  **86-260 Unislaw (PL)**
• **Jachura, Michal**
  **02-353 Warszawa (PL)**
• **Banaszek, Konrad**
  **02-606 Warszawa (PL)**

(74) Representative: **AOMB Polska Sp. z.o.o.**
  **ul. Rondo Ignacego Daszynskiego 1**
  **00-843 Warsaw (PL)**

(56) References cited:
  EP-B1- 3 244 566     WO-A1-2017/015532
  CN-U- 211 352 207

• **RUPESH KUMAR ET AL: "Experimental demonstration of single-shot quantum and classical signal transmission on single wavelength optical pulse", ARXIV.ORG, CORNELL UNIVERSITY LIBRARY, 201 OLIN LIBRARY CORNELL UNIVERSITY ITHACA, NY 14853, 22 July 2019 (2019-07-22), XP081445977,**
• **BANASZEK KONRAD ET AL: "Quantum Limits in Optical Communications", JOURNAL OF LIGHTWAVE TECHNOLOGY, IEEE, USA, vol. 38, no. 10, 12 February 2020 (2020-02-12), pages 2740-2753, XP011788870, ISSN: 0733-8724, DOI: 10.1109/JLT.2020.2973890 [retrieved on 2020-05-14]**
• **Khan Imran ET AL: "Satellite_based QKD", , 1 January 2018 (2018-01-01), pages 1-8, XP055876505, Retrieved from the Internet: URL:https://www.optica-opn.org/opn/media/Images/PDF/2018/0218/26-33_OPN_02_18.pdf?ex t=.pdf [retrieved on 2022-01-05]**

## Description

### Technical field

The subject matter of the invention is a method for coherent optical communications (including: transmitting and receiving an optical signal) involving simultaneous transmission of information and distribution of a cryptographic key, based on phase and amplitude modulation of an optical carrier wave and on its phase-sensitive detection, wherein it is possible to simultaneously transmit a bit stream of classical information and to distribute a cryptographic key and/or a quantum key, both realised by a single light source. The invention also includes an optical communications system (including: an optical signal transmitter and receiver) involving simultaneous transmission of classical information and distribution of a cryptographic and/or a quantum key, based on phase and amplitude modulation of an optical carrier wave and on its phase-sensitive detection, which realises the method according to the invention.

### Prior art

In the state of the art, many modulation formats are known to be used to encode and transmit information using electromagnetic waves with optical frequencies, described e.g. in the monographs [Bogdan Galwas, "Podstawy telekomunikacji optofalowej", ISBN 978-83-952678-0-2, ed. Akademicka Seria WWSI Informatyka i Telekomunikacja (Open Access publication available online: http://akademickaseriawwsi.wwsi.edu.pl/] or [Bixio Rimoldi, "Principles of digital communication: A top-down approach", ISBN 978-1-107-11645-0, ed. Cambridge University Press]. A special category of modulation formats are those that use the carrier wave phase, referred to as coherent modulation formats. These formats are relatively difficult to implement in practice as they require phase-sensitive detection, such as homodyne or heterodyne detection.

The simplest method for transmitting information using the phase of an optical signal is a method involving transmission of a carrier wave (corresponding to a bit value of 0) or a carrier wave with a phase shift $\pi$ (corresponding to a bit value of 1). This method is referred to in the literature as binary phase shift keying or BPSK format in which the alphabet used for communications consists of two symbols that differ in the phase of the carrier wave. For example, the invention described in international patent application [US8687970B2] uses a BPSK modulation protocol in an embodiment.

QPSK modulation (short for *Quadrature Phase Shift Keying*) is another variant of coherent signal modulation in which the information is encoded by the phase of the optical carrier wave. This variant allows two bits of information per symbol to be transmitted using an alphabet consisting of four symbols. The phase shift of the carrier wave for each symbol is respectively: 0, $\pi/2$, $\pi$ or $3\pi/2$, and to each symbol a pair of bits is assigned with values: 00, 01, 10, 11, respectively. The value of the coded bits is read out based on the phase measurement of the carrier wave. An example implementation of the use of QPSK modulation is described in patent document [US9525491B2], describing a QPSK-modulated signal transmitter, and in document [EP3741078A1], where QPSK modulation is used to transmit cryptographic key bits, in one of the embodiments.

QAM modulation (short for *Quadrature Amplitude Modulation*) is the most advanced variant of coherent signal modulation in which information is encoded using both the phase and amplitude of the carrier wave. The detection of QAM modulation requires the measurement of both quadratures of the optical carrier wave using an optical hybrid combined with balanced photodetectors. Usually, the name of the QAM modulation format has an additionally specified number of used symbols. For example, QAM-8 and QAM-16 are modulation formats with eight and sixteen symbols, respectively. The use of k symbols allows $\log_2(k)$ bits of information to be transmitted per symbol sent. In the state of the art, also modulation formats are known that use the vertical and horizontal polarisation components of the carrier wave separately. These formats have an additional prefix DP (Dual-Polarization) in their name. An exemplary implementation of the use of QAM modulation is described in patent document [EP3404856A1] showing a QAM-modulated signal transmitter and in document [US5640417A] showing a QAM-modulated signal receiver.

Separate domains of the state of the art are methods of quantum cryptography which is a set of procedures for transmitting secret (encrypted) messages with security guaranteed by the fundamental laws of quantum mechanics [N. Gisin, G. Ribordy, W. Tittel, and H. Zbinden "Quantum Cryptography" Review of Modern Physics 74, 145-195, 2002, DOI: 10.1103/RevModPhys.74.145]. The most important component of quantum cryptography is Quantum Key Distribution (QKD), which allows two communicating parties to produce a random secret key (e.g. a sequence of bits) that can later be used to encrypt and decrypt messages, while remaining unknown with absolute certainty to any third party. Quantum key distribution is often identified with quantum cryptography because it is the most essential component thereof, while others consider it a separate domain of the state of the art.

The European patent document [EP3244566B1] of 2016 describes a continuous-variable-based quantum cryptographic key distribution (CV-QKD) scheme in which laser pulses are sent as phase references in a single optical channel in addition to laser pulses encoding the key. Key coding pulses and reference pulses propagate through the optical channel alternately. The document discloses a system and an associated method for implementing a QKD protocol, based on coherent optical communication. Thanks to the use of the reference pulses, the presented scheme has a high tolerance to phase distortions in the optical path and allows the use of standard telecommunication equipment with reduced technical requirements with respect to phase noise, such as, e.g., diode lasers with standard spectral linewidths. A comprehensive review of the state of the art in the domain of continuous-variable quantum cryptography is presented in [F. Laudenbach et al., "Continuous-Variable Quantum Key Distribution with Gaussian Modulation-The Theory of Practical Implementations" Advanced Quantum Technologies 1(1), 1800011, 2018 DOI: https://doi.org/10.1002/qute.201870011].

In scientific publication [T. Ikuta and K. Inoue, "Intensity modulation and direct detection quantum key distribution based on quantum noise", New J. Phys., 18 013018, 2016, DOI: 10.1088/1367-2630/18/1/013018] a QKD scheme based on laser beam amplitude modulation and direct detection is proposed and it is examined in terms of the level of safety achieved using considerations based on information theory. In this scheme, two laser pulses of slightly different amplitude, encoding the key bits, are sent from the transmitter. The amplitude of the pulses is then measured at the receiver, but the probability of distinguishing the pulses is very low. Thus, in most cases, the measurement result is non-conclusive. In this paper, the security of the scheme is analysed in terms of two typical eavesdropping methods, the beam-splitting attack and the intercept-resend attack, under the assumption that the transmitting and receiving devices are fully trusted. This analysis has demonstrated that the proposed scheme allows secure key distribution over a short (up to a few kilometres) or medium (up to tens of kilometres) range.

In known state-of-the-art solutions, attempts are made to realize classical communication and quantum key distribution in parallel by multiplexing multiple optical signals with different carrier waves, transmitted over a single optical channel. For example, in paper [M. Peev, A. Poppe, et al., IEEE Photonics Technology Letters, "Toward the Integration of CV Quantum Key Distribution in Deployed Optical Networks" 30, 7, 650-653, 2018, DOI: 10.1109/LPT.2018.2810334] several wavelengths were used to transmit information (using OOK-modulated signals), while a separate wavelength was used for quantum key distribution. In this publication, the cryptographic key was transmitted at a central wavelength of 1550 nm, while information was transmitted at other wavelengths, specifically in ranges of 1530-1545 nm, 1530-1535 nm and/or 1552-1561 nm.

Patent document [US10169613B2] of 2016 describes a method and a device for implementing data transmission over radio wavelengths, wherein covert symbols are sent in addition to a standard set of overt symbols. The information transmitted by the covert symbols is used to authenticate the sender. The assumption of the proposed transmission scheme is that the information transmitted by additional modulation will look like detection noise to a potential eavesdropper and/or that the eavesdropper's receiver will be technologically incapable to detect the covert symbols. This prevents third parties, unaware of the covert modulation, from pretending to be the sender. The technique described is used in the military sector, where it is particularly important to verify the identity of the sender of the message.

Continuous-variable-based quantum key distribution (CV QKD) protocols with discrete modulation have great implementation potential due to their experimental simplicity and possible use of existing telecommunications infrastructure. Their safety analysis is more difficult than in the case of Gaussian-modulated schemes, however, in the paper [N. Lütkenhaus et al., Phys. Rev. X 9, 041064 (2019)], a novel method for security analysis of such protocols is presented, paving the way for their widespread implementation.

Document XP081445977
Title Experimental demonstration of single-shot quantum and classical signal transmission on single wavelength optical pulse
Published 22-07-2019
Author Rupesh Kumar; Adrian Wonfor; Richard Penty; Tim Spiller; Ian White
Document WO201701553
Title SYSTEM AND METHODS FOR COMBINING MIMO AND MODE-DIVISION MULTIPLEXING Applicant NXGEN PARTNERS IP LLC Inventor ASHRAFI S; LINGUIST R D
Document XP011788870
Title Quantum Limits in Optical Communications Published 12-02-2020
Author Banaszek Konrad; Kunz Ludwig; Jachura Michal; Jarzyna Marcin
Document CN211352207U
Published 25-08-2020
Title Single-wavelength quantum and classical communication simultaneous transmission system
ApplicantUNIV SOUTH CHINA NORMAL
Inventor ZHANG QIANLIN; GUO BANGHONG; HU MIN
Document XP055876505 Title Satellite_based QKD
Published 01-01-20180
Author Khan Imran; Bettina Heim; Andreas Neuzner; Christoph Marquardt

## Problem from the state of the art

The problem from the state of the art is the multiplexed transmission of information and the distribution of the cryptographic key, requiring two different optical (air or fibre) channels which require the use of two different light sources. Another problem from the state of the art is the simultaneous transmission of information and the cryptographic key, requiring a single optical (air or fibre) channel, and two light sources of different wavelengths, each dedicated to the transmission of the cryptographic key or the transmission of information respectively. In the already known solutions in the state of the art, in order to transmit a cryptographic key (e.g. QKD), it is usually necessary to have a separate, dedicated infrastructure, e.g. optical fibre or satellite.

Transmission of key bits and information bits on a single wavelength using phase and amplitude modulation and phase-sensitive detection is not used in state-of-the-art solutions due to several independent factors:

(i) the rapid increase in the availability of photodiodes with very high quantum efficiency has taken place over the last several years and therefore new applications are constantly being found for them;

(ii) theoretical security proofs for continuous-variable quantum cryptography (CV QKD) protocols with discrete modulation have been presented over the last several years;

(iii) due to the recent development of quantum cryptography techniques based on key encryption using the phase or polarisation of single photons, there is a natural tendency to pursue this course of technological development;

(iv) in standard optical telecommunications offered commercially, dozens of laser beams differing in wavelength are propagated in optical fibres (referred to as dense wavelength division multiplexing, DWDM), allowing bitrates of the order of 1 Tbps to be achieved, with no guarantee of transmission security. The transmission of key bits and information bits on a single wavelength does not attract widespread interest on the telecommunications services market because the potential buyers of this type of solutions are mainly entities transmitting data requiring higher security standards, e.g. financial institutions, army garrisons, government administration institutions or special services.

## Solution to the problem

The invention described in the present patent application relates to the use of modified coherent modulation formats (BPSK, QPSK, QAM), i.e. those in which the phase and amplitude of the signal are modulated, and thus require phase-sensitive detection (also referred to as coherent detection) of the optical carrier wave. The standard set of symbols used for the transmission of information is modified so that all symbols encode both cryptographic key bits and information bits simultaneously, using a single optical carrier wavelength. The number of symbols is increased so that various value combinations of information bits and cryptographic key bits can be transmitted. The symbols encoding various bits of the cryptographic key differ in amplitude and/or phase of the optical beam.

The solution to the problem is not a system consisting of a laser, the light beam of which is split by a beam-splitter or a fibre-optics beam-splitter and then the first light beam is used to transmit information bits while the second beam is used to transmit cryptographic key bits.

## Glossary and definitions of terms known in the state of the art and used in the patent specification

In the present specification, the terms used have the following meanings described in the definitions below:

The term "information bit" means a data bit which cannot be used as a cryptographic key bit because it is theoretically possible to eavesdrop on it.

The term "cryptographic key bit" means a bit of data which can be used as a cryptographic key because it is impossible to eavesdrop on it under the assumptions made in the document.

The term 'direct detection' means a method of signal measurement in which the intensity of an electromagnetic wave is measured.

The term "FSO" (short for Free Space Optics) refers to a wireless optical communications technology that uses light emission and reception in free space to transmit data between two points. It is useful when physical connections via fibre optics cables are impractical due to high costs (e.g. in geographically remote regions), impossible to implement (such as for watercraft and aircraft), or when the distance between sender and recipient is so large that optical signal losses in the optical fibre render communication impossible.

The term "symbol" refers to the state of the electromagnetic field encoding a defined value of a bit or bits.

The term "alphabet" is a set of electromagnetic field states (symbols) including in particular states which differ in the phase of the carrier wave (BPSK, QPSK modulation formats), or in the phase and amplitude of the carrier wave (QAM modulation format).

The term "BPSK" means Binary Phase Shift Keying (BPSK) modulation - the simplest form of Phase Shift Keying (PSK) modulation, in which the alphabet consists of two symbols the phase of which can take one of two values shifted by 180°, representing a logical "0" or "1".

The term "QPSK" means Quadrature Phase Shift Keying (QPSK) - modulation in which the alphabet consists of four symbols differing in phase value, allowing two bits of information per symbol to be transmitted.

The letters "I" and "Q" stand for two quadratures of light with phase shifted by $\pi/2$.

The term "constellation diagram" means a graphical representation of the alphabet of symbols (light states) used for digital data transmission. It represents symbols on a two-dimensional coordinate system the axes of which denote the amplitudes of light quadratures I and Q.

The term "QAM" means Quadrature Amplitude Modulation (QAM) - a quadrature amplitude-phase modulation used for digital data transmission. QAM modulation is a combination of amplitude modulation and phase modulation. Data bits are grouped into pairs, threes, fours, etc., which correspond to light states that differ in both amplitude and phase. The QAM signal is a linear combination of two orthogonal waveforms (shifted in phase by $\pi/2$): cosine and sine waveforms. The used amplitude-phase states are usually represented by a so-called constellation diagram, where the amplitude of both quadratures I and Q for each symbol is shown.

The term "QKD" means Quantum Key Distribution.

In this patent specification, "light power" and "light intensity" are to be understood as synonyms for the same parameter.

In the present document, other terms not defined above have meanings which are given and understood by a professional in the field in light of the best knowledge available, the present disclosure and the context of the patent specification.

## Summary of the invention

A method for coherent transmission of an optical signal with simultaneous transmission of information bits and distribution of cryptographic key bits using amplitude-phase modulation of a laser beam, according to the invention, is characterised by using a first modulation with defined areas in the IQ plane, where I and Q are two light quadratures of said laser beam, with phase shifted by $\pi/2$, and encoding the information bits by means of the first modulation, wherein symbols of a second modulation within the areas of the first modulation in the IQ plane are defined, wherein the symbols of the second modulation are used to encode cryptographic key bits, and the Euclidean distance in the IQ plane between any two symbols of the second modulation located in different areas of the first modulation is at least three times larger than the largest Euclidean distance between any two symbols of the second modulation located in the same area of the first modulation.

Preferably, both the first modulation used for encoding the information bits and the second modulation used for encoding the cryptographic key bits are implemented in a format analogous to BPSK.

Preferably, alternatively, the first modulation used for encoding the information bits is implemented using a modulation analogous to BPSK, while the second modulation used for encoding cryptographic key bits is implemented using a format analogous to QPSK.

Preferably, alternatively, both the first modulation used for encoding the information bits and the second modulation used for encoding the cryptographic key bits are implemented in a format analogous to QPSK.

A transmitter for coherent transmission of the optical signal, allowing for the simultaneous transmission of information bits and distribution of cryptographic key bits, comprising a laser as a light source and a modulator connected thereto by an optical fibre, according to the invention, is characterised in that the modulator is adapted and configured to transmit the optical signal according to the above method.

A method for receiving the optical signal, wherein IQ quadrature detection is carried out, wherein I and Q are two quadratures of said optical signal, with phase shifted by $\pi/2$, or homodyne detection of the optical signal is carried out, by assigning the received optical signal to decision areas representing individual transmitted symbols, according to the invention, is characterised by receiving the optical signal that has been transmitted using the above method and using a set of first decision areas ($d_0$, $d_1$, $d_{00}$, $d_{01}$, $d_{10}$, $d_{11}$) for detecting first modulation areas associated with information bit values and using a set of second decision areas ($k_x$, $k_{xx}$, $k_0$, $k_1$, $k_{00}$, $k_{01}$, $k_{10}$, $k_{11}$) for detecting second modulation symbols, associated with cryptographic key bit values, wherein each first decision area ($d_0$, $d_1$, $d_{00}$, $d_{01}$, $d_{10}$, $d_{11}$) includes at least two second decision areas ($k_x$, $k_{xx}$, $k_0$, $k_1$, $k_{00}$, $k_{01}$, $k_{10}$, $k_{11}$), wherein the cryptographic key is received only when the variance of the signal value distribution associated with the selected second modulation symbol is lower than 1.05 of variance resulting from detection shot noise, wherein above 1.05, the reception of the cryptographic key is aborted, and the reception of information bits is carried out regardless of the variance of the signal value distribution associated with the selected second modulation symbol.

Preferably, the cryptographic key is received only if the variance of the signal value distribution associated with the second modulation symbols in the second decision areas is lower than 1.04 of the variance resulting from the detection shot noise, wherein above 1.04, the reception of the cryptographic key is aborted, and the reception of information bits is carried out regardless of the variance of the signal value distribution associated with the selected second modulation symbol.

More preferably, the cryptographic key is received only if the variance of the signal value distribution associated with the second modulation symbols in the second decision areas is lower than 1.02 of the variance resulting from the detection shot noise, wherein above 1.02, the reception of the cryptographic key is aborted, and the reception of information bits is carried out regardless of the variance of the signal value distribution associated with the selected second modulation symbol.

Preferably, the differential photocurrent value associated with a randomly selected quadrature I or Q of said optical signal is measured at a receiver.

The receiver for coherent reception of the optical signal with simultaneous transmission of information bits and distribution of cryptographic key bits, comprising an IQ quadrature detector or a homodyne detector, or a phase-sensitive detector electrically connected to a discriminator, according to the invention, is characterised in that the receiver is adapted and configured to receive the signal according to the above method.

A method for coherent optical communications with simultaneous transmission of information bits and distribution of cryptographic key bits using amplitude-phase modulation of the laser beam, according to the invention, is characterised in that

- during transmission, the first modulation with defined areas in the IQ plane is used, where I and Q are the two light quadratures of the above said laser beam, with phase shifted by $\pi/2$, and the information bits are encoded by the first modulation, wherein symbols of the second modulation are defined within the areas of the first modulation in the IQ plane, the symbols of the second modulation being used to encode cryptographic key bits, and the Euclidean distance on the IQ plane between any two symbols of the second modulation located in different areas of the first modulation is at least three times larger than the largest Euclidean distance between any two symbols of the second modulation located in the same area of the first modulation, and

- during reception, the optical signal is received that has been transmitted by the above method and the set of first decision areas ($d_0$, $d_1$, $d_{00}$, $d_{01}$, $d_{10}$, $d_{11}$) is used for detecting first modulation areas and the set of second decision areas ($k_x$, $k_{xx}$, $k_0$, $k_1$, $k_{00}$, $k_{01}$, $k_{10}$, $k_{11}$) is used for detecting second modulation symbols associated with cryptographic key bit values, wherein each first decision area ($d_0$, $d_1$, $d_{00}$, $d_{01}$, $d_{10}$, $d_{11}$) includes at least two second decision areas ($k_x$, $k_{xx}$, $k_0$, $k_1$, $k_{00}$, $k_{01}$, $k_{10}$, $k_{11}$), wherein the distribution of the cryptographic key is only carried out when the variance of the signal value distribution associated with the selected second modulation symbol is lower than 1.05 of variance resulting from the detection shot noise, wherein above 1.05, the distribution of the cryptographic key is aborted, and the transmission of information bits is carried out regardless of the variance of the signal value distribution associated with the selected second modulation symbol.

Preferably, the distribution of the cryptographic key is only carried out when the variance of the signal value distribution associated with the second modulation symbols in the second decision areas is lower than 1.04 of the variance resulting from the detection shot noise, wherein above 1.04, the distribution of the cryptographic key is aborted, and the transmission of information bits is carried out regardless of the variance of the signal value distribution associated with the selected second modulation symbol.

More preferably, the distribution of the cryptographic key is only carried out when the variance of the signal value distribution associated with the second modulation symbols in the second decision areas is lower than 1.02 of the variance resulting from the detection shot noise, wherein above 1.02, the distribution of the cryptographic key is aborted, and the transmission of information bits is carried out regardless of the variance of the signal value distribution associated with the selected second modulation symbol.

A system for coherent optical communications with simultaneous transmission of information bits and distribution of cryptographic key bits using amplitude-phase modulation of the laser beam, comprising a transmitter and a receiver, wherein

- the transmitter comprises a continuous wave laser or a high-repetition-rate pulsed laser connected by optical fibre to an IQ modulator, or the transmitter comprises an amplitude modulator connected to a phase modulator,

- the receiver comprises the IQ quadrature detector or a homodyne receiver, or a phase-sensitive receiver electrically connected to the discriminator, and according to the invention, is characterised in that the transmitter is connected to the receiver by a single optical channel and the transmitter and the receiver are adapted and configured to simultaneously transmit information bits and distribute cryptographic key bits according to the above method.

Preferably, the transmitter is connected to the receiver by a single optical fibre or a single free-space link.

## Advantageous effects of the invention

The invention according to the present patent specification has numerous advantages.

The use of a common set of symbols to transmit information bits and key bits allows for secure communication between the sender and the recipient using standard telecommunications infrastructure (optical fibres, modulators, photodiodes) in contrast to quantum cryptography techniques which require dedicated infrastructure (a separate satellite optical link or optical fibre link) and specialised equipment (sources of single photons, detectors of single photons).

The invention allows for secure distribution of the cryptographic key if the optical channel is eavesdropped. Secure distribution of the cryptographic key is possible even if the eavesdropper has more optical signal power available than the authorised recipient. This means that the potential presence of an eavesdropper, indicated by an anomalous drop in the received signal power, can be ignored for a very large range of power drops, while maintaining security. The presence of an eavesdropper can also be detected by monitoring the detection noise, and in particular by comparing it to the noise resulting from the shot noise. In this case, the key distribution must be aborted when the detection noise exceeds a certain threshold. In this case, the transmission of information bits may still be continued.

## Possible areas of application of the invention

The present invention finds a use in the telecommunications industry. Above all, among operators offering terrestrial telecommunications services (using existing fibre optics infrastructure) or satellite telecommunications services (using optical satellite communications) with enhanced security. Such services are provided, for example, to the army, government administration institutions, special services or the banking sector. The invention may also find application among optical communication equipment companies that would like to enhance the functionality of the physical layer with quantum key distribution.

## Preferred embodiments of the invention

Now, the invention will be presented in more detail, in a preferred embodiment, with reference to the attached drawing in which:

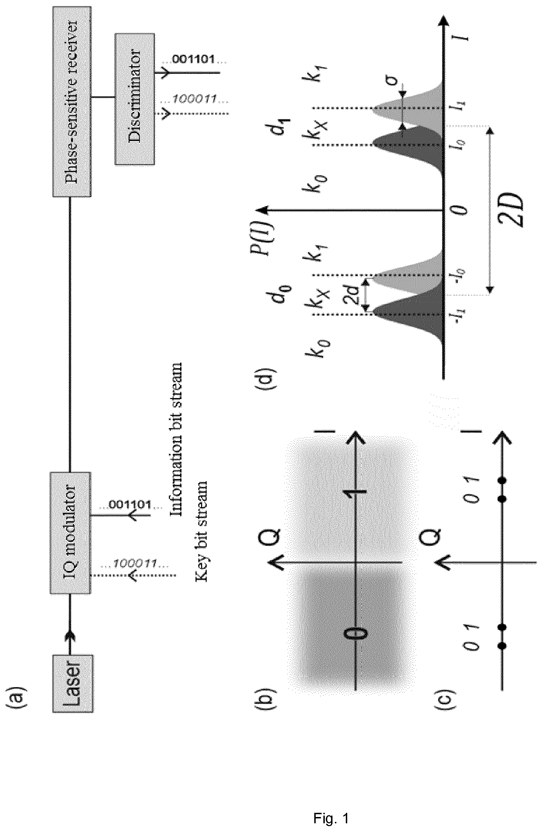

Fig. 1    shows an embodiment of the invention for simultaneous coherent transmission of information and distribution of a cryptographic key using a modified BPSK modulation format: (a) diagram of a system implementing the invention; (b) diagram showing first modulation areas (**0, 1**) encoding information bits, wherein the information bit values associated with each area are indicated in bold; (c) constellation diagram of the second modulation symbols, used in the method according to the invention, along with the assignment of cryptographic key bit values (in italics) for the individual symbols (*0, 1*); (d) diagram of detection, using a phase-sensitive detector, showing the detection probability distribution of differential photocurrent values, complemented with decision thresholds that divide the set of possible measurement results into first decision areas associated with the value of an information bit ($d_0$, $d_1$) and second decision areas associated with the value of a cryptographic key bit ($k_0$, $k_X$, $k_1$).

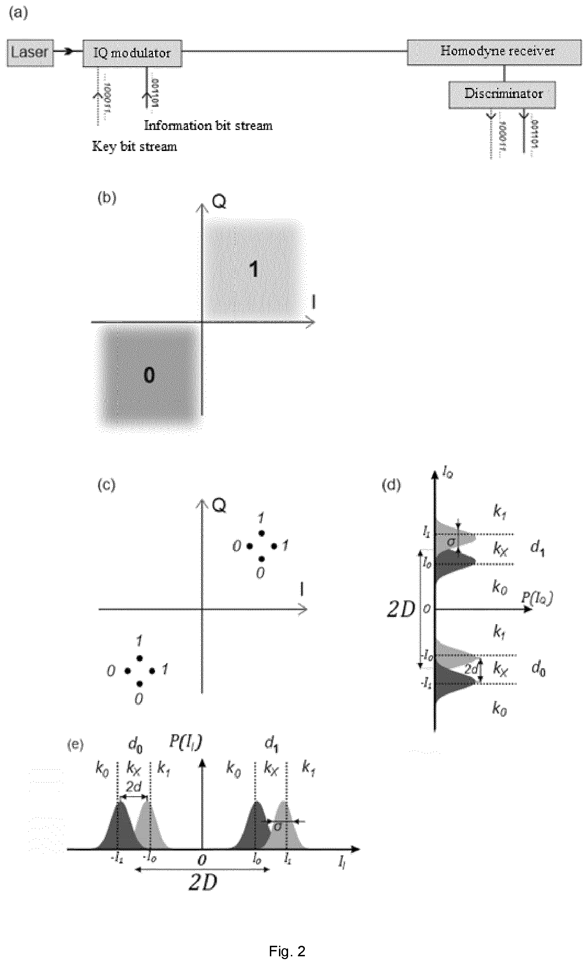

Fig. 2 shows an embodiment of the invention for simultaneous coherent transmission of information and distribution of a cryptographic key using modified BPSK and QPSK modulation formats and a homodyne detector: (a) diagram of a system implementing the invention; (b) diagram showing first modulation areas (**0, 1**) encoding information bit values, wherein the information bits associated with each area are indicated in bold; (c) constellation diagram of the second modulation symbols, used in the method according to the invention, along with the assignment of cryptographic key bit values (in italics) for the individual symbols (*0, 1*); (d) diagram of detection, using a homodyne detector showing the detection probability distribution of differential photocurrent values $I_Q$ (associated with quadrature Q) complemented with decision thresholds that divide the set of possible measurement results into first decision areas associated with the value of an information bit ($d_0$, $d_1$) and second decision areas associated with the value of a cryptographic key bit ($k_0$, $k_X$, $k_1$); (e) diagram of detection using a homodyne detector showing the detection probability distribution of differential photocurrent values $I_I$ (associated with quadrature I) complemented with decision thresholds that divide a possible set of measurement results into first decision areas associated with the value of an information bit ($d_0$, $d_1$), and second decision areas associated with the value of a cryptographic key bit ($k_0$, $k_X$, $k_1$).

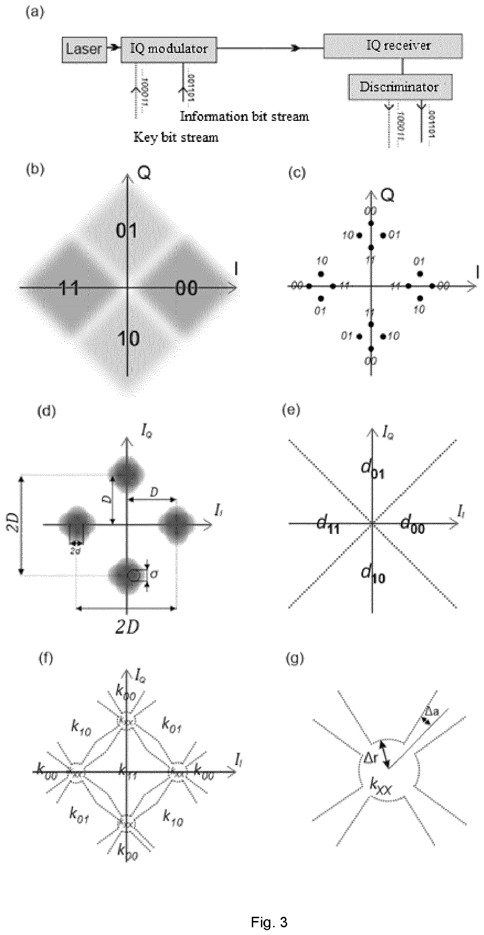

Fig. 3 shows an embodiment of the invention for simultaneous coherent transmission of information and distribution of a cryptographic key using modified QPSK modulation format and an IQ detector: (a) diagram of a system implementing the invention; (b) diagram showing first modulation areas encoding information bits, wherein the information bit values associated with four individual areas (**10, 00, 01, 11**) are indicated in bold; (c) constellation diagram of the second modulation symbols, used in the method according to the invention, along with the assignment of cryptographic key bit values (in italics) for the individual symbols (*01, 10, 11, 00*); (d) two-dimensional detection probability distribution of differential photocurrents values $I_I$, $I_Q$ associated with the quadratures I, Q, respectively; (e) shows the division of the two-dimensional space of possible measurement results of differential photocurrents ($I_I$, $I_Q$) into decision areas ($d_{00}$, $d_{01}$, $d_{10}$, $d_{11}$) associated with the values of information bits; (f) shows the division of the two-dimensional space of possible measurement results of differential photocurrents ($I_I$, $I_Q$) into decision areas ($k_{00}$, $k_{01}$, $k_{10}$, $k_{11}$, $k_{xx}$) associated with values of cryptographic key bits; (g) shows a close-up of a fragment of the area $k_{xx}$. It consists of four circles of radius $\varDelta_r$, the centres of which are situated at the points (-D,0), (0,D), (D,0), (0,-D), and sixteen angles of a size $2\Delta_a$, the vertices of which are located in the points (-D,0), (0,D), (D,0), (0,-D) and the bisectors of which are respectively inclined at 45°, 135°, 225° and 315° to the horizontal axis of the coordinate system.

The figure uses notation that is consistent with the glossary definitions.

## Embodiments of the invention

The following examples are included only to illustrate the invention and to explain particular aspects thereof, and not to limit it, and should not be interpreted as the entire range thereof which is defined in the appended patent claims. In the following embodiments, unless indicated otherwise, standard materials and methods used in the technical field were used or manufacturers' recommendations for specific devices, materials and methods were followed.

## EMBODIMENT 1

## Simultaneous coherent transmission of information and distribution of a cryptographic key using modified BPSK (binary-phase-shift-keying) modulation format

In the following example shown in Fig. 1 in point (a) the light source is a laser (with a selected wavelength in the range of 400-1600 nm), the beam of which is modulated by an IQ modulator or alternatively by an amplitude modulator combined with a phase modulator. For communication, an alphabet is used consisting of four symbols differing in phase and amplitude. Both the first modulation (by means of which the information bits are encoded) and the second modulation (by means of which the cryptographic key bits are encoded) are implemented in a format analogous to BPSK. The modulation areas associated with the encoding of information bits, along with the assignment of information bit values to individual areas indicated in bold, are shown in Fig. 1(b).

The constellation diagram of alphabet along with the assignment of cryptographic key bit values to individual symbols (in italics) are shown in Fig. 1(c). It should be noted that the transmitted constellation symbols should be identified with points in IQ phase space, while the detection of constellation symbols at the receiver is subjected to shot noise consistent with a statistical normal distribution. In the example shown, each symbol allows the transmission of single information bit and at most single cryptographic key bit. The signal is detected using a phase-sensitive detector (e.g. homodyne detector) and a discriminator.

Fig. 1(d) shows the probability distribution of the measured differential photocurrent values. This distribution has local maxima at points *-D-d, -D+d, D-d, D+d* corresponding to the mean values of the measured photocurrent $I^{avg}$ for symbols associated with different values of the key bit, which are concentrated in two areas associated with different values of the information bit. The association of symbols with information bits and cryptographic key bits is shown in Table 1 and in Fig. 1(b) and Fig. 1(c).

**Table 1** Encoded bits of information and cryptographic key for individual symbols with mean value of measured differential photocurrent $I^{avg}$

| $I^{avg}$ | Information bit values | Key bit value |
|---|---|---|
| *-D-d* | **0** | *0* |
| *-D+d* | **0** | *1* |
| *D-d* | **1** | *0* |
| *D+d* | **1** | *1* |

In Fig. 1(d) *D* denotes the mean photocurrent value for symbols encoding the information bit **1**, *2d* denotes the difference in mean photocurrent values for light states encoding the same information bits and different cryptographic key bits, and $\sigma$ denotes the standard deviation of the measured differential photocurrent distribution for each of the symbols, resulting among others from the shot noise of the electromagnetic field measurement.

The horizontal axis in Fig. 1(d) represents the set of all possible results of differential photocurrent measurements at the detector. It is divided into decision areas by fixed decision thresholds set by the values of the measured differential photocurrent $-I_1, -I_0, I_0, I_1$ presented in Fig. 1 (d) as vertical dashed lines. Values of the detected bits depend on which decision area the measurement result is located in. The set of first decision areas $(d_0, d_1)$ is used for detection of information bits, and the set of second decision areas $(k_x, k_0, k_1)$ is used for detection of cryptographic key bits, wherein each first decision area $(d_0, d_1)$ comprises three second decision areas $(k_x, k_0, k_1)$. Areas $k_0$ correspond to a key bit value of *0*, areas $k_1$ correspond to a key bit value of *1*, and areas $k_x$ correspond to an undefined key bit value. The scheme for reading the information bit values is as follows:

- When the measured value of differential photocurrent *I* is within the range $(-\infty, 0)$, denoted in Fig. 1(d) as area $d_0$, the value of the information bit is **0**
- When the measured value of differential photocurrent *I* is within the range $[0, \infty)$, denoted in Fig. 1(d) as area $d_1$, the value of the information bit is **1**

The scheme for reading the bit values of a cryptographic key is as follows:

- When the measured value of differential photocurrent *I* is within the range $[-\infty, -I_1)$, denoted in Fig. 1(d) as area $k_0$, the value of the key bit is 0;
- When the measured value of differential photocurrent *I* is within the range $[-I_1, -I_0)$, denoted in Fig. 1(d) as area $k_x$, the value of the key bit is undefined;
- When the measured value of differential photocurrent *I* is within the range $[-I_0, 0)$, denoted in Fig. 1(d) as area $k_1$, the value of the key bit is *1*;
- When the measured value of differential photocurrent *I* is within the range $[0, I_0)$, denoted in Fig. 1(d) as area $k_0$, the value of the key bit is *0*;
- When the measured value of differential photocurrent *I* is within the range $[I_0, I_1)$, denoted in Fig. 1(d) as area $k_x$, the value of the key bit is undefined;
- When the measured value of differential photocurrent *I* is within the range $[I_1, \infty)$, denoted in Fig. 1(d) as area $k_1$, the value of the key bit is *1*;

Optimal parameter values *D, d* and decision thresholds $I_0, I_1$ can be determined numerically. In order to reduce the probability of erroneous detection of an information bit to a value below $10^{-6}$, the ratio $D/\sigma$ must be higher than 5. The optimal ratio between the separation of the symbols encoding the different bits of the cryptographic key and the standard deviation of the photocurrent distribution is $d/\sigma = 1.14$. The optimal values of decision thresholds $I_0, I_1$ are $I_0 = D - \sigma \times 1.12$ and $I_1 = D + \sigma \times 1.12$, respectively.

It was observed that the optimal operating points change when the signal detection, in addition to shot noise, is subjected to noise resulting from fluctuations in the intensity of the emitted laser beam or from the thermal noise. It was also observed that the optimal operating points change when the power of the signal measured by the eavesdropper (referred to as Eve) is lower or higher than the power of the signal measured by the authorised recipient.

**EMBODIMENT 2**

**Simultaneous coherent transmission of information and distribution of a cryptographic key using modified QAM (*quadrature-phase-shift-keying*) modulation format and a homodyne detector.**

In the following example shown in Fig. 2(a) the source of light pulses is a laser (with a selected wavelength in the range of 400-1600 nm), the beam of which is modulated by an amplitude modulator and a phase modulator. For communication, an alphabet is used consisting of sixteen symbols for which the laser pulses differ in phase and amplitude. The first modulation (by means of which the information bits are encoded) is implemented in BPSK format rotated in IQ phase space by an angle of 45 degrees, while the second modulation (by means of which the cryptographic key bits are encoded) is implemented in QPSK format. The modulation areas associated with the encoding of information bits, along with the assignment of bit values to individual areas (in bold), are shown in Fig. 2(b).

The constellation diagram of alphabet along with the assignment of cryptographic key bit values to individual symbols (in italics), are shown in Fig. 2(c). It should be noted that the transmitted symbols should be identified with points in IQ phase space, while the detection of symbols at the receiver is subjected to shot noise consistent with a statistical normal distribution. In the example shown, each symbol allows the transmission of single information bit and at most single cryptographic key bit. The signal is detected using a phase-sensitive detector (e.g. homodyne detector) and a discriminator.

Fig. 2(d) shows the probability distribution of the measured differential photocurrent values associated with the quadrature Q and Fig. 2(e) shows the probability distribution of the measured differential photocurrent values associated with the quadrature I. In both cases this distribution has local maxima at points *-D-d, -D+d, D-d, D+d* corresponding to the mean values of the measured photocurrent $I_Q^{avg}$ or $I_I^{avg}$ for symbols associated with different values of the key bit, which are clustered in two areas associated with different values of the information bit. The association of symbols with information bits and cryptographic key bits is shown in Table 2 and in Fig. 2(b) and Fig. 2(c).

**Table 2**

| Encoded bits of information and cryptographic key for individual symbols with mean differential photocurrent $I_I^{avg}$ proportional to the quadrature I and $I_Q^{avg}$ proportional to the quadrature Q. | | | | |
|---|---|---|---|---|
| $I_I^{avg}$ | $I_Q^{avg}$ Q | Information bit values | Key bit value | Group |
| *-D-d* | *-D* | **0** | *0* | (i) |
| *-D+d* | *-D* | **0** | *1* | (i) |
| *D-d* | *D* | **1** | *0* | (i) |
| *D+d* | *D* | **1** | *1* | (i) |
| *-D* | *-D-d* | **0** | *0* | (ii) |
| *-D* | *-D+d* | **0** | *1* | (ii) |
| *D* | *D-d* | **1** | *0* | (ii) |
| *D* | *D+d* | **1** | *1* | (ii) |

In Fig. 2(d) and Fig. 2(e), D denotes the mean photocurrent value $I_I$ associated with quadrature I of symbols encoding information bits **1,** 2*d* denotes the difference in mean photocurrent values for light states encoding the same information bits but different cryptographic key bits, and $\sigma$ denotes the standard deviation of the measured differential photocurrent distribution for each of the symbols, resulting among others from the shot noise of the electromagnetic field measurement.

In the example shown, each symbol allows the transmission of single information bit and at most single cryptographic key bit. Each of the symbols is sent by the sender with equal probability, with the transmitted symbols belonging to one of two groups indicated by Roman numerals (i) and (ii). For correct detection, group (i) requires measurement of photocurrent $I_I$ proportional to quadrature I, whereas group (ii) requires measurement of photocurrent $I_Q$ proportional to quadrature Q. The measured quadrature is selected by entering a phase shift of 0, or $\pi/2$ in the local oscillator of the homodyne detector. Signal detection is performed by means of a homodyne receiver capable of measuring the selected carrier wave quadrature and a discriminator. The selection of the measured photocurrent (quadrature) is performed randomly. The belonging of the symbols to each group is shown in Table 2.

The vertical axis in Fig. 2(d) and the horizontal axis in Fig. 2(e) represent the set of all possible results of differential photocurrent measurements in the detector associated with quadratures Q and I, respectively. These sets are divided into decision areas by fixed decision thresholds given by the values of the measured differential photocurrent $-I_1$, $-I_0$,$-I_0$,$I_1$, presented in Fig. 2(d) and Fig. 2(e) as dashed lines. The value of the detected bits depends on which decision area the measurement result is located in. The set of first decision areas ($d_0$, $d_1$) is used for detection of information bits, and the set of second decision areas ($k_x$, $k_0$, $k_1$) is used for detection of cryptographic key bits, with each first decision area ($d_0$, $d_1$) comprising three second decision areas ($k_x$, $k_0$, $k_1$). Areas $k_0$ correspond to a key bit value of 0, areas $k_1$ correspond to a key bit value of 1, and areas $k_x$ correspond to an undefined key bit value. The scheme for reading the information bit values is as follows:

- When the measured value of differential photocurrent $I_I$ or differential photocurrent $I_Q$ is within the range $(-\infty,0)$, denoted in Fig. 2(d) and Fig. 2(e) as area $d_0$, the value of the information bit is **0**
- When the measured value of differential photocurrent $I_I$ or differential photocurrent $I_Q$ is within the range $(0,\infty)$, denoted in Fig. 2(d) and Fig. 2(e) as area $d_1$, the value of the information bit is **1**

The scheme for reading the bit values of a cryptographic key is as follows:

- When the measured value of differential photocurrent $I_I$ or differential photocurrent $I_Q$ is within the range $[-\infty,-I_1)$, denoted in Fig. 2(d) and Fig. 2(e) as area $k_0$, the value of the key bit is 0;
- When the measured value of differential photocurrent $I_I$ or differential photocurrent $I_Q$ is within the range $[-I_1,-I_0)$, denoted in Fig. 2(d) and Fig. 2(e) as area $k_X$, the value of the key bit is undefined;
- When the measured value of differential photocurrent $I_I$ or differential photocurrent $I_Q$ is within the range $[-I_0,0)$, denoted in Fig. 2(d) and Fig. 2(e) as area $k_1$, the value of the key bit is 1;

- When the measured value of differential photocurrent $I_I$ or differential photocurrent $I_Q$ is within the range $[0,I_0)$, denoted in Fig. 2(d) and Fig. 2(e) as area $k_0$, the value of the key bit is 0;
- When the measured value of differential photocurrent $I_I$ or differential photocurrent $I_Q$ is within the range $[I_0,I_1)$, denoted in Fig. 2(d) and Fig. 2(e) as area $k_X$, the value of the key bit is undefined;
- When the measured value of differential photocurrent $I_I$ or differential photocurrent $I_Q$ is within the range $[I_1,\infty)$, denoted in Fig. 2(d) and Fig. 2(e) as area $k_1$, the value of the key bit is 1;

After the measurements have been made, the recipient sends information to the sender, via the public channel, about which photocurrent (which quadrature) he measured for the individual symbols. Analogously, the sender sends, via the public channel, information about which group the transmitted symbols belonged to. The cryptographic key is created based on those measurement results where photocurrent $I_I$ was measured for symbols in group (i) and on those measurement results where photocurrent $I_Q$ was measured for symbols in group (ii).

The optimal parameter values $D,d$ were determined numerically. In order to reduce the probability of erroneous detection of an information bit to a value below $10^{-6}$, the ratio $D/\sigma$ must be higher than 5. The optimal ratio between the separation of the symbols encoding different bits of the cryptographic key d and the standard deviation $\sigma$ associated, among others, with the detection shot noise is between $d/\sigma = 0.5$ and $d/\sigma = 1.5$. The optimal values of the decision thresholds $I_0$, $I_1$, associated with the part of the results on the basis of which the cryptographic key is not created have been established in the prior art [N. Lütkenhaus et al, Phys. Rev. X 9, 041064 (2019)] and were used analogously in the implementation of the present invention. Optimal parameter values $d$, $D$, $I_0$, $I_1$ change when the signal detection, in addition to shot noise, is subjected to noise resulting from fluctuations in the power of the emitted laser beam or to thermal noise.

Preferably, in the present embodiment of the invention, the noise level in the received signal is monitored. Then, the cryptographic key transmission is aborted if it is detected that the variance of the distribution of signal values associated with the selected second modulation symbol is higher than 1.02 of the variance resulting from detection shot noise. At the same time, bits of information can still be transmitted. If the variance of the measured signal values is lower than 1.02 of the variance resulting from the detection shot noise, then, as the presented proof shows in prior art [N. Lütkenhaus et al., Phys. Rev. X 9, 041064 (2019)], the key transmission is secure up to a distance of approx. 50 km. This distance is fully sufficient in the applications envisaged for the invention, i.e. over the distances of optical fibre metropolitan networks.

**EMBODIMENT3**

**Simultaneous coherent transmission of information and distribution of a cryptographic key using modified QPSK (*quadrature-phase-shift-keying*) modulation format and an IQ detector.**

In the following example shown in Fig. 3(a) the source of light pulses is a laser (with a selected wavelength in the range of 400-1600 nm), the beam of which is modulated by an optical IQ modulator. For communication, an alphabet is used consisting of sixteen symbols for which the laser pulses differ in phase and amplitude. Both the first modulation (by means of which the information bits are encoded) and the second modulation (by means of which the cryptographic key bits are encoded) are implemented in QPSK format. The modulation areas associated with the encoding of information bits, along with the assignment of bit values to individual areas (in bold), are shown in Fig. 3 (b).

The constellation diagram of alphabet along with the assignment of cryptographic key bit values to individual symbols (in italics) are shown in Fig. 3(c). It should be noted that the transmitted constellation symbols should be identified with points in IQ phase space, while the detection of constellation symbols at the receiver is subjected to shot noise consistent with a statistical normal distribution. In the example shown, each symbol allows the transmission of two information bits and at most two cryptographic key bits. Signal detection is performed using an IQ quadrature receiver and a discriminator.

Fig. 3(d) shows a two-dimensional probability distribution of the measured differential photocurrents values associated with IQ quadratures. This distribution has 16 local maxima at points *(-D-d,0), (-D+d,0), (D-d,0), (D+d,0), (0,-D-d),(0,-D+d),(0,D-d),(0,D+d),(-D, -d),(-D,d),(D,-d), (D,d),(-d,-D),(d,-D),(-d,D),(-d,-D)* corresponding to the mean values of the measured photocurrents pair ( $I_I^{avg}, I_Q^{avg}$ ) for symbols associated with different values of the cryptographic key bit, which are clustered in four areas associated with different values of the information bits. The association of symbols with information bits and cryptographic key bits is shown in Table 3 and in Fig. 3(b) and Fig. 3(c).

**Table 3**

| Encoded bits of information and cryptographic key for individual symbols with mean differential photocurrent $I_I^{avg}$ for the measurement of the quadrature I and $I_Q^{avg}$ for the measurement of the quadrature Q. | | | |
|---|---|---|---|
| $I_I^{avg}$ | $I_Q^{avg}$ Q | Information bit values | Key bit value |
| *-D-d* | *0* | **10** | *10* |
| *-D+d* | *0* | **10** | *00* |
| *D-d* | *0* | **00** | *10* |
| *D+d* | *0* | **00** | *00* |
| *-D* | *-d* | **10** | *11* |
| *-D* | *d* | **10** | *01* |
| *D* | *-d* | **00** | *11* |
| *D* | *d* | **00** | *01* |
| *0* | *-D-d* | **11** | *11* |
| *0* | *-D+d* | **11** | *01* |
| *0* | *D-d* | **01** | *11* |
| *0* | *D+d* | **01** | *01* |
| *-d* | *-D* | **11** | *10* |
| *D* | *-D* | **11** | *00* |
| *-d* | *D* | **01** | *10* |
| *D* | *D* | **01** | *00* |

In Fig. 3(d), $D$ denotes the mean photocurrent value $I_I$ associated with quadrature I of symbols encoding information bits **00,** $2d$ denotes the difference in mean photocurrent values for light states encoding the same information bits and different cryptographic key bits, and $\sigma$ denotes the standard deviation of the measured differential photocurrent distribution for each of the symbols, resulting among others from the shot noise of the electromagnetic field measurement.

Fig. 3(e) and Fig. 3(f) show a two-dimensional set of all possible results of differential photocurrents measurements $(I_I , I_Q)$. This set is divided into decision areas by means of fixed decision thresholds presented in the figures by means of dashed lines. The value of the detected bits depends on which decision area the measurement result is located in. For the detection of information bits, a set of first decision areas $(d_{00}, d_{10}, d_{01}, d_{11})$ is used and for the detection of cryptographic key bits, a set of second decision areas $(k_{00}, k_{01}, k_{10}, k_{11}, k_{xx})$ is used, wherein each first decision area $(d_{00}, d_{10}, d_{01}, d_{11})$ comprises five second decision areas $(k_{00}, k_{01}, k_{10}, k_{11}, k_{xx})$. Areas $k_{00}$ correspond to key bits value $00$, areas $k_{10}$ correspond to key bits value $10$, areas $k_{01}$ correspond to key bits value $01$, areas $k_{11}$ correspond to key bits value $11$, and areas $k_{xx}$ correspond to an undefined value of key bits. Fig. 3(g) shows a close-up of a fragment of the area $k_{xx}$. It consists of four circles of radius $\Delta_r$, the centres of which are situated at the points (-D,0), (0,D), (D,0), (0,-D), and sixteen angles of a size $2\Delta_a$ the vertices of which are situated at the points (-D,0), (0,D), (D,0), (0,-D) and the bisectors of which are respectively inclined at 45°, 135°, 225° and 315° to the horizontal axis of the coordinate system.

The scheme for reading the information bits values is as follows:

- When $|I_Q| < I_I$ , where $\|$ denotes an absolute value, the value of the information bits is **01.** The decision area determined by this inequality is denoted in Fig. 3(e) as area $d_{01}$.
- When $I_Q > |I_I|$ , where $\|$ denotes an absolute value, the value of the information bits is **00.** The decision area determined by this inequality is denoted in Fig. 3(e) as area $d_{00}$.
- When $|I_Q| < -I_I$, where $\|$ denotes an absolute value, the value of the information bits is **11.** The decision area determined by this inequality is denoted in Fig. 3(e) as area $d_{11}$.
- When $-I_Q > |I_I|$ , where $\|$ denotes an absolute value, the value of the information bits is **10.** The decision area determined by this inequality is denoted in Fig. 3(e) as area $d_{10}$.

The reading of the key bit values from a pair of differential photocurrent measurements $(I_I , I_Q)$ is performed by dividing the two-dimensional space of possible results into ten decision areas shown in Fig. 3(f) determined by the following criteria:

- When the pair of measured differential photocurrents $(I_I , I_Q)$ is inside the square formed by the vertices located at (-D,0), (0,D), (D,0), (0,-D), the value of the key bits is $11$. The decision area determined by this criterion is denoted in Fig. 3(f) as area $k_{11}$.
- When the pair of measured differential photocurrents $(I_I , I_Q)$ satisfies the inequality $I_Q - D > |I_I|$ or $-I_Q - D > |I_I|$, or $|I_Q| < I_I - D$, or $|I_Q| < -I_I - D$ where $\|$ denotes an absolute value, the value of the key bits is 00. The decision areas determined by this inequality are denoted in Fig. 3(f) as $k_{00}$.
- When the pair of measured differential photocurrents $(I_I , I_Q)$ does not satisfy any of the above conditions and is in the first quadrant of the coordinate system defined by the values $I_I , I_Q$ , the value of the key bits is $01$. The decision area associated with these values is denoted in Fig. 3(f) as area $k_{01}$.
- When the pair of measured differential photocurrents $(I_I , I_Q)$ does not satisfy any of the above conditions and is in the second quadrant of the coordinate system defined by the values $I_I , I_Q$ , the value of the key bits is $10$. The decision area associated with these values is denoted in Fig. 3(f) as area $k_{10}$.
- When the pair of measured differential photocurrents $(I_I , I_Q)$ does not satisfy any of the above conditions and is in the third quadrant of the coordinate system defined by the values $I_I , I_Q$ , the value of the key bits is $01$. The decision area associated with these values is denoted in Fig. 3(f) as area $k_{01}$.
- When the pair of measured differential photocurrents $(I_I , I_Q)$ does not satisfy any of the above conditions and is in the fourth quadrant of the coordinate system defined by the values $I_I , I_Q$ , the value of the key bits is $10$. The decision area associated with these values is denoted in Fig. 3(f) as area $k_{10}$.
- In addition, irrespective of satisfying any of the above criteria when the pair of measured differential photocurrents $(I_I , I_Q)$ is located at a distance of shorter than $\Delta_r$ from any of the points (-D,0), (0,D), (D,0), (0,-D) or when the pair of measured differential photocurrents $(I_I , I_Q)$ is within one of the sixteen angles of a size $2\Delta_a$ the vertices of which are located at points (-D,0), (0,D), (D,0), (0,-D) and the bisectors of which are inclined at 45°, 135°, 225° and 315°, respectively, to the horizontal axis of the coordinate system, the value of the key bits is undefined. The decision area associated with the undefined value of the key bits is denoted in Fig. 3(f) as area $k_{xx}$, while a close-up of its fragment is shown in Fig. 3(g).

The optimal parameter values $D, d$ were determined numerically. In order to reduce the probability of erroneous detection of an information bit to a value below $10^{-6}$, the ratio $D/\sigma$ must be higher than 5. The optimal ratio between the separation of the symbols encoding different bits of the cryptographic key d and the standard deviation $\sigma$ resulting from

among others the detection shot noise is between $d/\sigma = 0.5$ and $d/\sigma = 1.5$. The optimal values of the parameters $\Delta_r$ and $\Delta_a$, associated with areas $k_{xx}$, and thus the part of the results on the basis of which the cryptographic key is not created have been established in the prior art [N. Lütkenhaus et al, Phys. Rev. X 9, 041064 (2019)] and were used analogously in the implementation of the present invention. Optimal parameter values $d, D, \Delta_r, \Delta_a$ change when the signal detection, in addition to shot noise, is subjected to noise resulting from fluctuations in the power of the emitted laser beam or to thermal noise.

Preferably, in the present embodiment of the invention, the noise level in the received signal is monitored. Then, the cryptographic key transmission is aborted if it is detected that the variance of the distribution of the signal values associated with the selected second modulation symbol is higher than 1.04 of the variance resulting from detection shot noise. At the same time, bits of information can still be transmitted. If the variance of the measured signal is lower than 1.04 of the variance associated with detection shot noise, then, as the presented proof shows in prior art [N. Lütkenhaus et al., Phys. Rev. X 9, 041064 (2019)], the key transmission is secure up to a distance of approx. 50 km. This distance is fully sufficient in the applications envisaged for the invention, i.e. over the distances of optical fibre metropolitan networks.

**Acknowledgements:**

The inventors would like to thank the Centre for Quantum Optical Technologies (QOT, (project no. MAB/2018/4) at the University of Warsaw, which is conducted within the framework of the International Research Agendas program of the Foundation for Polish Science and co-financed by the European Union from the Intelligent Development Operational Programme (priority axis IV, activity 4.3.) and the National Laboratory of Atomic, Molecular and Optical Physics at the Nicolaus Copernicus University in Torun, where the FNP First Team/2017-3/20 project entitled "Applications of single photon technologies" is conducted.

**Claims**

1.  A method for coherent transmission of an optical signal with simultaneous transmission of information bits and distribution of cryptographic key bits using amplitude-phase modulation of a laser beam, **characterised in that** a first modulation with defined areas in the IQ plane is used, where I and Q are two light quadratures of said laser beam with phase shifted by $\pi/2$, and the first modulation is used to encode information bits, whereas within the areas of the first modulation in the IQ plane symbols of a second modulation are defined, while the symbols of the second modulation are used to encode cryptographic key bits, and the Euclidean distance on the IQ plane between any two symbols of the second modulation located in different areas of the first modulation is at least three times larger than the largest Euclidean distance between any two symbols of the second modulation located in the same area of the first modulation.

2.  The method according to claim 1, **characterised in that** both the first modulation used for encoding information bits and the second modulation used for encoding cryptographic key bits, are implemented using a modulation format analogous to BPSK.

3.  The method according to claim 1, **characterised in that** the first modulation by means of which the information bits are encoded is implemented using a modulation analogous to BPSK, while the second modulation by means of which the cryptographic key bits are encoded is implemented using a modulation format analogous to QPSK.

4.  The method according to claim 1, **characterised in that** both the first modulation used for encoding information bits and the second modulation used for encoding cryptographic key bits, are implemented using a modulation format analogous to QPSK.

5.  A transmitter for coherent transmission of the optical signal, allowing for simultaneous transmission of information bits and distribution of cryptographic key bits, comprising a laser as a light source and a modulator connected thereto by an optical fibre, **characterised in that** the modulator is adapted and configured to transmit the optical signal following the method defined in any of claims 1 to 4.

6.  A method for receiving the optical signal, wherein IQ quadrature detection is carried out, I and Q being two quadratures of said optical signal with phase shifted by $\pi/2$, or homodyne detection of the optical signal is realised, by assigning the received optical signal to decision areas representing individual transmitted symbols, **characterised by receiving** the optical signal that has been transmitted according to any of claims 1 to 4 and using a set of first decision

areas ($d_0$, $d_1$, $d_{00}$, $d_{01}$, $d_{10}$, $d_{11}$) for detecting first modulation areas associated with information bit values and using a set of second decision areas ($k_x$, $k_{xx}$, $k_0$, $k_1$, $k_{00}$, $k_{01}$, $k_{10}$, $k_{11}$) for detecting second modulation symbols associated with cryptographic key bit values, wherein each first decision area ($d_0$, $d_1$, $d_{00}$, $d_{01}$, $d_{10}$, $d_{11}$) includes at least two second decision areas ($k_x$, $k_{xx}$, $k_0$, $k_1$, $k_{00}$, $k_{01}$, $k_{10}$, $k_{11}$), wherein the cryptographic key is received only when the variance of the signal value distribution associated with the selected second modulation symbol is lower than 1.05 of the variance resulting from detection shot noise, wherein above 1.05, the reception of the cryptographic key is aborted, and the reception of information bits is continued regardless of the variance of the signal value distribution associated with the selected second modulation symbol.

7. The method according to claim 6, **characterised in that** the cryptographic key is received only if the variance of the signal value distribution associated with the selected second modulation symbol is lower than 1.04 of the variance resulting from the detection shot noise, wherein above 1.04, the reception of the cryptographic key is aborted, and the reception of information bits is continued regardless of the variance of the signal value distribution associated with the selected second modulation symbol.

8. The method according to claim 6 or 7, **characterised in that** the cryptographic key is received only if the variance of the signal value distribution associated with the selected second modulation symbol is lower than 1.02 of the variance resulting from the detection shot noise, wherein above 1.02, the reception of the cryptographic key is aborted, and the reception of information bits is continued regardless of the variance of the signal value distribution associated with the selected second modulation symbol.

9. The method according to claim 6, 7 or 8, **characterised in that** a differential photocurrent value associated with a randomly selected quadrature I or Q of said optical signal is measured at a receiver.

10. A receiver for coherent detection of the optical signal with simultaneous transmission of information bits and distribution of cryptographic key bits, comprising an IQ quadrature detector or a homodyne detector, or a phase-sensitive detector electrically connected to a discriminator, **characterised in that** the receiver is adapted and configured to receive the signal according to the method defined in any of claims 6 to 9.

11. A method for coherent optical communication with simultaneous transmission of information bits and distribution of cryptographic key bits using amplitude-phase modulation of the laser beam, **characterised in that**

- during transmission, the first modulation with defined areas in the IQ plane is used, where I and Q are the two light quadratures of the above said laser beam with phase shifted by $\pi/2$, and the first modulation is used to encode information bits, whereas within the areas of the first modulation in the IQ plane symbols of a second modulation are defined, while the symbols of the second modulation are used to encode cryptographic key bits, and the Euclidean distance on the IQ plane between any two symbols of the second modulation located in different areas of the first modulation is at least three times larger than the largest Euclidean distance between any two symbols of the second modulation located in within the same area of the first modulation, and:
- during detection, the optical signal is received that has been transmitted by the method according to any of claims 1 to 4 and the set of first decision areas ($d_0$, $d_1$, $d_{00}$, $d_{01}$, $d_{10}$, $d_{11}$) is used for detecting first modulation areas associated with information bits and the set of second decision areas ($k_x$, $k_{xx}$, $k_0$, $k_1$, $k_{00}$, $k_{01}$, $k_{10}$, $k_{11}$) is used for detecting second modulation symbols associated with cryptographic key bit values, wherein each first decision area ($d_0$, $d_1$, $d_{00}$, $d_{01}$, $d_{10}$, $d_{11}$) includes at least two second decision areas ($k_x$, $k_{xx}$, $k_0$, $k_1$, $k_{00}$, $k_{01}$, $k_{10}$, $k_{11}$), wherein the distribution of the cryptographic key is only realised when the variance of the signal value distribution associated with the selected second modulation symbol is lower than 1.05 of the variance resulting from detection shot noise, wherein above 1.05, the distribution of the cryptographic key is aborted, and the transmission of information bits is continued regardless of the variance of the signal value distribution associated with the selected second modulation symbol.

12. The method according to claim 11, **characterised in that** the distribution of the cryptographic key is only realised when the variance of the signal value distribution associated with the selected second modulation symbol is lower than 1.04 of the variance resulting from the detection shot noise, wherein above 1.04, the distribution of the cryptographic key is aborted, and the transmission of information bits is continued regardless of the variance of the signal value distribution associated with the selected second modulation symbol.

13. The method according to claim 11 or 12, **characterised in that** the distribution of the cryptographic key is only realised when the variance of the signal value distribution associated with the selected second modulation symbol is lower than 1.02 of the variance resulting from the detection shot noise, wherein above 1.02, the distribution of the cryptographic key is aborted, and the transmission of information bits is continued regardless of the variance of the signal value distribution associated with the selected second modulation symbol.

14. A system for coherent optical communication with simultaneous transmission of information bits and distribution of cryptographic key bits using amplitude-phase modulation of the laser beam, comprising a transmitter and a receiver, wherein

- the transmitter comprises a continuous wave laser or a high-repetition-rate pulsed laser connected by optical fibre to an IQ modulator, or the transmitter comprises an amplitude modulator connected to a phase modulator,
- the receiver comprises the IQ quadrature detector or a homodyne receiver, or a phase-sensitive receiver electrically connected to the discriminator, **characterised in that** the transmitter is connected to the receiver by a single optical channel and the transmitter and the receiver are adapted and configured to simultaneously transmit information bits and distribute cryptographic key bits following the method defined in any of claims 11, 12 or 13.

15. The system according to claim 14, **characterised in that** the transmitter is connected to the receiver by a single optical fibre or a free-space link.

**Patentansprüche**

1. Verfahren zur kohärenten Übertragung eines optischen Signals mit gleichzeitiger Übertragung von Informationsbits und Verteilung von kryptographischen Schlüsselbits unter Verwendung der Amplituden-Phasen-Modulation eines Laserstrahls, **dadurch gekennzeichnet, dass** eine erste Modulation mit definierten Bereichen in der IQ-Ebene verwendet wird, wobei I und Q zwei um $\pi/2$ phasenverschobene Lichtquadraturen des Laserstrahls sind, und die erste Modulation zur Codierung von Informationsbits verwendet wird, wobei innerhalb der Bereiche der ersten Modulation in der IQ-Ebene Symbole einer zweiten Modulation definiert werden, während die Symbole der zweiten Modulation zur Codierung von kryptographischen Schlüsselbits verwendet werden, und der euklidische Abstand in der IQ-Ebene zwischen zwei beliebigen Symbolen der zweiten Modulation, die sich in verschiedenen Bereichen der ersten Modulation befinden, mindestens dreimal größer ist als der größte euklidische Abstand zwischen zwei beliebigen Symbolen der zweiten Modulation, die sich in demselben Bereich der ersten Modulation befinden.

2. Verfahren nach Anspruch 1, **dadurch gekennzeichnet, dass** sowohl die erste Modulation, die zur Codierung von Informationsbits verwendet wird, als auch die zweite Modulation, die zur Codierung von kryptographischen Schlüsselbits verwendet wird, unter Verwendung eines Modulationsformats analog zu BPSK implementiert werden.

3. Verfahren nach Anspruch 1, **dadurch gekennzeichnet, dass** die erste Modulation, mittels derer die Informationsbits kodiert werden, unter Verwendung einer Modulation analog zu BPSK implementiert wird, während die zweite Modulation, mittels derer die kryptographischen Schlüsselbits kodiert werden, unter Verwendung eines Modulationsformats analog zu QPSK implementiert wird.

4. Verfahren nach Anspruch 1, **dadurch gekennzeichnet, dass** sowohl die erste Modulation, die zur Codierung von Informationsbits verwendet wird, als auch die zweite Modulation, die zur Codierung von kryptographischen Schlüsselbits verwendet wird, unter Verwendung eines Modulationsformats analog zu QPSK implementiert werden.

5. Sender zur kohärenten Übertragung des optischen Signals, der die gleichzeitige Übertragung von Informationsbits und die Verteilung von kryptographischen Schlüsselbits ermöglicht, mit einem Laser als Lichtquelle und einem Modulator, der mit diesem über eine optische Faser verbunden ist, **dadurch gekennzeichnet, dass** der Modulator so angepasst und konfiguriert ist, dass er das optische Signal nach dem in einem der Ansprüche 1 bis 4 definierten Verfahren überträgt.

6. Verfahren zum Empfang des optischen Signals, bei dem eine IQ-Quadraturdetektion durchgeführt wird, wobei I und Q zwei Quadraturen des optischen Signals mit einer Phasenverschiebung von $\pi/2$ sind, oder eine homodyne Detektion des optischen Signals realisiert wird, indem das empfangene optische Signal Entscheidungsbereichen zugeordnet wird, die einzelne
gesendete Symbole darstellen, **dadurch gekennzeichnet, dass** das optische Signal, das nach einem der Ansprüche 1 bis 4 übertragen wurde, empfangen wird und ein Satz von ersten Entscheidungsbereichen ($d_0$, $d_1$, $d_{00}$, $d_{01}$, $d_{10}$,

$d_{11}$) zum Erfassen von ersten Modulationsbereichen, die Informationsbitwerten zugeordnet sind verwendet, und ein Satz von zweiten Entscheidungsbereichen ($k_x$, $k_{xx}$, $k_0$, $k_1$, $k_{00}$, $k_{01}$, $k_{10}$, $k_{11}$) zum Erfassen von zweiten Modulationssymbolen, die kryptographischen Schlüsselbitwerten zugeordnet sind verwendet, wobei jeder erste Entscheidungsbereich ($d_0$, $d_1$, $d_{00}$, $d_{01}$, $d_{10}$, $d_{11}$) mindestens zwei zweite Entscheidungsbereiche ($k_x$, $k_{xx}$, $k_0$, $k_1$, $k_{00}$, $k_{01}$, $k_{10}$, $k_{11}$), enthält, wobei der kryptographische Schlüssel nur empfangen wird, wenn die Varianz der Signalwertverteilung, die dem ausgewählten zweiten Modulationssymbol zugeordnet ist, kleiner als 1,05 der Varianz ist, die sich aus dem Detektionsschrotrauschen ergibt, wobei oberhalb von 1,05 der Empfang des kryptographischen Schlüssels abgebrochen wird und der Empfang von Informationsbits unabhängig von der Varianz der Signalwertverteilung, die mit dem ausgewählten zweiten Modulationssymbol verbunden ist, fortgesetzt wird.

7. Verfahren nach Anspruch 6, **dadurch gekennzeichnet, dass** der kryptographische Schlüssel nur dann empfangen wird, wenn die Varianz der Signalwertverteilung, die mit dem ausgewählten zweiten Modulationssymbol verbunden ist, kleiner als 1,04 der Varianz ist, die sich aus dem Detektionsschrotrauschen ergibt, wobei oberhalb von 1,04 der Empfang des kryptographischen Schlüssels abgebrochen wird und der Empfang von Informationsbits unabhängig von der Varianz der Signalwertverteilung, die mit dem ausgewählten zweiten Modulationssymbol verbunden ist, fortgesetzt wird.

8. Verfahren nach Anspruch 6 oder 7, **dadurch gekennzeichnet, dass** der kryptographische Schlüssel nur dann empfangen wird, wenn die Varianz der Signalwertverteilung, die mit dem ausgewählten zweiten Modulationssymbol verbunden ist, kleiner als 1,02 der Varianz ist, die sich aus dem Detektionsschrotrauschen ergibt, wobei oberhalb von 1,02 der Empfang des kryptographischen Schlüssels abgebrochen wird und der Empfang von Informationsbits unabhängig von der Varianz der Signalwertverteilung, die mit dem ausgewählten zweiten Modulationssymbol verbunden ist, fortgesetzt wird.

9. Verfahren nach Anspruch 6, 7 oder 8, **dadurch gekennzeichnet, dass** ein differentieller Fotostromwert, der mit einer zufällig ausgewählten Quadratur I oder Q des optischen Signals verbunden ist, an einem Empfänger gemessen wird.

10. Empfänger zur kohärenten Erfassung des optischen Signals mit gleichzeitiger Übertragung von Informationsbits und Verteilung von kryptographischen Schlüsselbits, der einen IQ-Quadraturdetektor oder einen homodynen Detekor oder einen phasenempfindlichen Detektor umfasst, der elektrisch mit einem Diskriminator verbunden ist, **dadurch gekennzeichnet, dass** der Empfänger so angepasst und konfiguriert ist, dass er das Signal gemäß dem in einem der Ansprüche 6 bis 9 definierten Verfahren empfängt.

11. Verfahren zur kohärenten optischen Kommunikation mit gleichzeitiger Übertragung von Informationsbits und Verteilung von kryptographischen Schlüsselbits durch Amplituden-Phasen-Modulation des Laserstrahls, **dadurch gekennzeichnet, dass**

   - während der Übertragung die erste Modulation mit definierten Bereichen in der IQ-Ebene verwendet wird, wobei I und Q die zwei um $\pi/2$ phasenverschobene Lichtquadraturen des oben genannten Laserstrahls sind, und die erste Modulation zur Codierung von Informationsbits verwendet wird, wobei innerhalb der Bereiche der ersten Modulation in der IQ-Ebene Symbole einer zweiten Modulation definiert werden, während die Symbole der zweiten Modulation zur Codierung von kryptographischen Schlüsselbits verwendet werden, und der euklidische Abstand in der IQ-Ebene zwischen zwei beliebigen Symbolen der zweiten Modulation, die sich in verschiedenen Bereichen der ersten Modulation befinden, mindestens dreimal größer ist als der größte euklidische Abstand zwischen zwei beliebigen Symbolen der zweiten Modulation, die sich in demselben Bereich der ersten Modulation befinden, und:
   - während der Detektion das optische Signal empfangen wird, das durch das Verfahren nach einem der Ansprüche 1 bis 4 übertragen wurde, empfangen wird und ein Satz von ersten Entscheidungsbereichen ($d_0$, $d_1$, $d_{00}$, $d_{01}$, $d_{10}$, $d_{11}$) zum Erfassen von ersten Modulationsbereichen, die Informationsbits zugeordnet sind verwendet, und ein Satz von zweiten Entscheidungsbereichen ($k_x$, $k_{xx}$, $k_0$, $k_1$, $k_{00}$, $k_{01}$, $k_{10}$, $k_{11}$) zum Erfassen von zweiten Modulationssymbolen, die kryptographischen Schlüsselbitwerten zugeordnet sind verwendet, wobei jeder erste Entscheidungsbereich ($d_0$, $d_1$, $d_{00}$, $d_{01}$, $d_{10}$, $d_{11}$) mindestens zwei zweite Entscheidungsbereiche ($k_x$, $k_{xx}$, $k_0$, $k_1$, $k_{00}$, $k_{01}$, $k_{10}$, $k_{11}$), enthält, wobei die Verteilung des kryptographischen Schlüssels nur realisiert wird, wenn die Varianz der Signalwertverteilung, die dem ausgewählten zweiten Modulationssymbol zugeordnet ist, kleiner als 1,05 der Varianz ist, die sich aus dem Detektionsschrotrauschen ergibt, wobei oberhalb von 1,05 die Verteilung des kryptographischen Schlüssels abgebrochen wird und die Übertragung von Informationsbits unabhängig von der Varianz der Signalwertverteilung, die mit dem ausgewählten zweiten Modulationssymbol verbunden ist, fortgesetzt wird.

12. Verfahren nach Anspruch 11, **dadurch gekennzeichnet, dass** die Verteilung des kryptographischen Schlüssels nur realisiert wird, wenn die Varianz der Signalwertverteilung, die mit dem ausgewählten zweiten Modulationssymbol verbunden ist, kleiner als 1,04 der Varianz ist, die sich aus dem Detektionsschrotrauschen ergibt, wobei oberhalb von 1,04 die Verteilung des kryptographischen Schlüssels abgebrochen wird und die Übertragung von Informationsbits unabhängig von der Varianz der Signalwertverteilung, die mit dem ausgewählten zweiten Modulationssymbol verbunden ist, fortgesetzt wird.

13. Verfahren nach Anspruch 11 oder 12, **dadurch gekennzeichnet, dass** die Verteilung des kryptographischen Schlüssels nur realisiert wird, wenn die Varianz der Signalwertverteilung, die mit dem ausgewählten zweiten Modulationssymbol verbunden ist, kleiner als 1,02 der Varianz ist, die sich aus dem Detektionsschrotrauschen ergibt, wobei oberhalb von 1,02 die Verteilung des kryptographischen Schlüssels abgebrochen wird und die Übertragung von Informationsbits unabhängig von der Varianz der Signalwertverteilung, die mit dem ausgewählten zweiten Modulationssymbol verbunden ist, fortgesetzt wird.

14. System zur kohärenten optischen Kommunikation mit gleichzeitiger Übertragung von Informationsbits und Verteilung von kryptographischen Schlüsselbits durch Amplituden-Phasen-Modulation des Laserstrahls, mit einem Sender und einem Empfänger, wobei

- der Sender einen Dauerstrichlaser oder einen gepulsten Laser mit hoher Wiederholungsrate umfasst, der über eine optische Faser mit einem IQ-Modulator verbunden ist, oder der Sender einen Amplitudenmodulator umfasst, der mit einem Phasenmodulator verbunden ist,
- der Empfänger den IQ-Quadraturdetektor oder einen homodynen Empfänger oder einen phasenempfindlichen Empfänger umfasst, der elektrisch mit dem Diskriminator verbunden ist, **dadurch gekennzeichnet, dass** der Sender mit dem Empfänger über einen einzigen optischen Kanal verbunden ist und der Sender und der Empfänger so angepasst und konfiguriert sind, dass sie gleichzeitig Informationsbits übertragen und kryptografische Schlüsselbits gemäß dem in einem der Ansprüche 11, 12 oder 13 definierten Verfahren verteilen.

15. System nach Anspruch 14, **dadurch gekennzeichnet, dass** der Sender mit dem Empfänger über eine einzige optische Faser oder eine Freiraumverbindung verbunden ist.


**Revendications**

1. Un procédé pour la transmission cohérente d'un signal optique avec transmission simultanée de bits d'information et distribution de bits de clé cryptographique utilisant la modulation amplitude-phase d'un faisceau laser, caractérisé en ce queune première modulation avec des zones définies dans le plan IQ est utilisée, où I et Q sont deux quadratures lumineuses dudit faisceau laser avec un déphasage de $\pi/2$, et la première modulation est utilisée pour coder des bits d'information, tandis qu'à l'intérieur des zones de la première modulation dans le plan IQ, des symboles d'une seconde modulation sont définis, tandis que les symboles de la seconde modulation sont utilisés pour coder les bits de clé cryptographique, et que la distance euclidienne sur le plan IQ entre n'importe quels deux symboles de la seconde modulation situés dans des zones différentes de la première modulation est au moins trois fois plus grande que la plus grande distance euclidienne entre n'importe quels deux symboles de la seconde modulation situés dans la même zone de la première modulation.

2. Le procédé selon la revendication 1, **caractérisé en ce que** tant la première modulation utilisée pour coder les bits d'information que la seconde modulation utilisée pour coder les bits de clé cryptographique sont mises en oeuvre à l'aide d'un format de modulation analogue au BPSK.

3. Le procédé selon la revendication 1, **caractérisé en ce que** la première modulation au moyen de laquelle les bits d'information sont codés est mise en oeuvre en utilisant une modulation analogue au BPSK, tandis que la seconde modulation au moyen de laquelle les bits de clé cryptographique sont codés est mise en oeuvre en utilisant un format de modulation analogue au QPSK.

4. Le procédé selon la revendication 1, **caractérisé en ce que** tant la première modulation utilisée pour coder les bits d'information que la seconde modulation utilisée pour coder les bits de clé cryptographique sont mises en oeuvre à l'aide d'un format de modulation analogue au QPSK.

**5.** Un émetteur pour la transmission cohérente du signal optique, permettant la transmission simultanée de bits d'information et la distribution de bits de clé cryptographique, comprenant un laser comme source de lumière et un modulateur relié à celui-ci par une fibre optique, **caractérisé en ce que** le modulateur est adapté et configuré pour transmettre le signal optique selon le procédé défini dans l'une quelconque des revendications 1 à 4.

**6.** Un procédé pour la réception du signal optique, dans lequel une détection en quadrature IQ est effectuée, I et Q étant deux quadratures dudit signal optique avec un déphasage de $\pi/2$, ou une détection homodyne du signal optique est réalisée, en assignant le signal optique reçu à des zones de décision représentant des symboles transmis individuels,

**caractérisé par** la réception du signal optique qui a été transmis selon l'une des revendications 1 à 4 et par l'utilisation d'un ensemble de premières zones de décision ($d_0$, $d_1$, $d_{00}$, $d_{01}$, $d_{10}$, $d_{11}$) pour détecter les premières zones de modulation associées aux valeurs des bits d'information et par l'utilisation d'un ensemble de secondes zones de décision ($k_x$, $k_{xx}$, $k_0$, $k_1$, $k_{00}$, $k_{01}$, $k_{10}$, $k_{11}$) pour détecter les seconds symboles de modulation associés aux valeurs binaires de clé cryptographique, dans lequel chaque première zone de décision ($d_0$, $d_1$, $d_{00}$, $d_{01}$, $d_{10}$, $d_{11}$) comprend au moins deux secondes zones de décision ($k_x$, $k_{xx}$, $k_0$, $k_1$, $k_{00}$, $k_{01}$, $k_{10}$, $k_{11}$), dans lequel la clé cryptographique n'est reçue que lorsque la variance de la distribution de valeur de signal associée au second symbole de modulation sélectionné est inférieure à 1,05 de la variance résultant du bruit de fond de détection, dans lequel au-delà de 1,05, la réception de la clé cryptographique est interrompue, et la réception des bits d'information se poursuit quelle que soit la variance de la distribution de valeur de signal associée au second symbole de modulation sélectionné.

**7.** Le procédé selon la revendication 6, **caractérisé en ce que** la clé cryptographique n'est reçue que si la variance de la distribution de valeur de signal associée au second symbole de modulation sélectionné est inférieure à 1,04 de la variance résultant du bruit de fond de détection, dans lequel au-delà de 1,04, la réception de la clé cryptographique est interrompue, et la réception des bits d'information se poursuit quelle que soit la variance de la distribution de valeur de signal associée au second symbole de modulation sélectionné.

**8.** Le procédé selon la revendication 6 ou 7, **caractérisé en ce que** la clé cryptographique n'est reçue que si la variance de la distribution de valeur de signal associée au second symbole de modulation sélectionné est inférieure à 1,02 de la variance résultant du bruit de fond de détection, dans lequel au-delà de 1,02, la réception de la clé cryptographique est interrompue, et la réception des bits d'information se poursuit quelle que soit la variance de la distribution de valeur de signal associée au second symbole de modulation sélectionné.

**9.** Le procédé selon la revendication 6, 7 ou 8, **caractérisé en ce qu'**une valeur de photocourant différentiel associée à une quadrature I ou Q sélectionnée aléatoirement dudit signal optique est mesurée au niveau d'un récepteur.

**10.** Un récepteur pour la détection cohérente du signal optique avec la transmission simultanée des bits d'information et la distribution des bits de clé cryptographique, comprenant un détecteur en quadrature IQ ou un détecteur homodyne, ou un détecteur sensible à la phase relié électriquement à un discriminateur, **caractérisé en ce que** le récepteur est adapté et configuré pour recevoir le signal selon le procédé défini dans l'une quelconque des revendications 6 à 9.

**11.** Un procédé pour la communication optique cohérente avec la transmission simultanée de bits d'information et la distribution de bits de clé cryptographique utilisant la modulation amplitude-phase du faisceau laser, **caractérisé en ce que**

- pendant la transmission, la première modulation avec des zones définies dans le plan IQ est utilisée, où I et Q sont les deux quadratures lumineuses dudit faisceau laser susmentionné avec un déphasage de $\pi/2$, et la première modulation est utilisée pour coder des bits d'information, tandis qu'à l'intérieur des zones de la première modulation dans le plan IQ, des symboles d'une seconde modulation sont définis, tandis que les symboles de la seconde modulation sont utilisés pour coder les bits de clé cryptographique, et que la distance euclidienne sur le plan IQ entre n'importe quels deux symboles de la seconde modulation situés dans des zones différentes de la première modulation est au moins trois fois plus grande que la plus grande distance euclidienne entre n'importe quels deux symboles de la seconde modulation situés dans la même zone de la première modulation, et
- pendant la détection, le signal optique qui a été transmis par le procédé selon l'une des revendications 1 à 4 est reçu et l'ensemble des premières zones de décision ($d_0$, $d_1$, $d_{00}$, $d_{01}$, $d_{10}$, $d_{11}$) est utilisé pour détecter les premières zones de modulation associées aux bits d'information et l'ensemble des secondes zones de décision ($k_x$, $k_{xx}$, $k_0$, $k_1$, $k_{00}$, $k_{01}$, $k_{10}$, $k_{11}$) est utilisé pour détecter les seconds symboles de modulation associés aux valeurs de bits de clé cryptographique, dans lequel chaque première zone de décision ($d_0$, $d_1$, $d_{00}$, $d_{01}$, $d_{10}$,

$d_{11}$) comprend au moins deux secondes zones de décision ($k_x$, $k_{xx}$, $k_0$, $k_1$, $k_{00}$, $k_{01}$, $k_{10}$, $k_{11}$), dans lequel la distribution de la clé cryptographique n'est réalisée que lorsque la variance de la distribution de valeur de signal associée au second symbole de modulation sélectionné est inférieure à 1,05 de la variance résultant du bruit de fond de détection, dans lequel au-delà de 1,05, la distribution de la clé cryptographique est interrompue, et la distribution des bits d'information se poursuit quelle que soit la variance de la distribution de valeur de signal associée au second symbole de modulation sélectionné.

12. Le procédé selon la revendication 11, **caractérisé en ce que** la distribution de la clé cryptographique n'est réalisée que lorsque la variance de la distribution de valeur de signal associée au second symbole de modulation sélectionné est inférieure à 1,04 de la variance résultant du bruit de fond de détection, dans lequel au-delà de 1,04, la distribution de la clé cryptographique est interrompue, et la transmission des bits d'information se poursuit quelle que soit la variance de la distribution de valeur de signal associée au second symbole de modulation sélectionné.

13. Le procédé selon la revendication 11 ou 12, **caractérisé en ce que** la distribution de la clé cryptographique n'est réalisée que lorsque la variance de la distribution de valeur de signal associée au second symbole de modulation sélectionné est inférieure à 1,02 de la variance résultant du bruit de fond de détection, dans lequel au-delà de 1,02, la distribution de la clé cryptographique est interrompue, et la transmission des bits d'information se poursuit quelle que soit la variance de la distribution de valeur de signal associée au second symbole de modulation sélectionné.

14. Un système pour la communication optique cohérente avec la transmission simultanée de bits d'information et la distribution de bits de clé cryptographique utilisant la modulation amplitude-phase du faisceau laser, comprenant un émetteur et un récepteur, dans lequel

   - l'émetteur comprend un laser à ondes continues ou un laser pulsé à haut taux de répétition relié par fibre optique à un modulateur IQ, ou l'émetteur comprend un modulateur d'amplitude relié à un modulateur de phase,
   - le récepteur comprend le détecteur en quadrature IQ ou un récepteur homodyne, ou un récepteur sensible à la phase relié électriquement au discriminateur, **caractérisé en ce que** l'émetteur est relié au récepteur par un seul canal optique et que l'émetteur et le récepteur sont adaptés et configurés pour transmettre simultanément des bits d'information et distribuer des bits de clé cryptographique selon le procédé défini dans l'une quelconque des revendications 11, 12 ou 13.

15. Le système selon la revendication 14, **caractérisé en ce que** l'émetteur est relié au récepteur par une seule fibre optique ou une liaison en espace libre.

Fig. 1

(a)

Laser → IQ modulator ——————————— Homodyne receiver

Discriminator

Information bit stream

Key bit stream

(b)

(c)

(d)

(e)

Fig. 2

Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 8687970 B2
- US 9525491 B2
- EP 3741078 A1
- EP 3404856 A1
- US 5640417 A
- EP 3244566 B1
- US 10169613 B2
- WO 201701553 A
- CN 211352207 U

### Non-patent literature cited in the description

- **BOGDAN GALWAS.** Podstawy telekomunikacji optofalowej. Akademicka Seria WWSI Informatyka i Telekomunikacja
- **BIXIO RIMOLDI.** Principles of digital communication: A top-down approach. Cambridge University Press
- **N. GISIN ; G. RIBORDY ; W. TITTEL ; H. ZBINDEN.** Quantum Cryptography. *Review of Modern Physics,* 2002, vol. 74, 145-195
- **F. LAUDENBACH et al.** Continuous-Variable Quantum Key Distribution with Gaussian Modulation-The Theory of Practical Implementations. *Advanced Quantum Technologies,* 2018, vol. 1 (1), 1800011, https://doi.org/10.1002/qute.201870011
- **T. IKUTA ; K. INOUE.** Intensity modulation and direct detection quantum key distribution based on quantum noise. *New J. Phys.,* 2016, vol. 18, 013018
- **M. PEEV ; A. POPPE et al.** Toward the Integration of CV Quantum Key Distribution in Deployed Optical Networks. *IEEE Photonics Technology Letters,* 2018, vol. 30 (7), 650-653
- **N. LÜTKENHAUS et al.** *Phys. Rev. X,* 2019, vol. 9, 041064
- **RUPESH KUMAR; ADRIAN WONFOR; RICHARD PENTY; TIM SPILLER; IAN WHITE.** *Experimental demonstration of single-shot quantum and classical signal transmission on single wavelength optical pulse,* 22 July 2019